# EUROPÄISCHE PATENTSCHRIFT

(11) **EP 0 408 848 B1**
(45) Veröffentlichungstag und Bekanntmachung des Hinweises auf die Patenterteilung: **31.03.1993**
(21) Anmeldenummer: 90108891.4
(22) Anmeldetag: 11.05.1990
(51) Int. Cl.: A23L 3/375, A23L 3/36, A23B 4/06

(54) **Verfahren und Vorrichtung zum Gefrieren grossvolumiger Lebensmittel**
Process and device for the freezing of large size food
Procédé et appareil pour la congélation de produits alimentaires volumineux

(30) Priorität: 19.06.1989 DE 3919866
(43) Veröffentlichungstag der Anmeldung: 23.01.1991
(73) Patentinhaber: MESSER GRIESHEIM GMBH, D-60270 Frankfurt (DE)
(72) Erfinder: Buchmüller, Jürgen, D-4150 Krefeld (DE); Hoffmans, Wolfgang, D-4156 Willich (DE); Nobis, Peter, D-4040 Neuss 21 (DE); Weyermanns, Günther, D-5142 Hückelhofen 6 (DE); Zerwas, Stefan, D-4300 Essen (DE)

(56) Entgegenhaltungen:
- EP-A- 0 235 119
- DE-A- 3 312 594
- DE-C- 919 573
- PATENT ABSTRACTS OF JAPAN, Band 12, Nr. 455 (C-548)(3302), 29. November 1988

## Beschreibung

Die Erfindung betrifft ein Verfahren zum Gefrieren großvolumiger Lebensmittel mit hohem Wasseranteil nach dem Oberbegriff des Anspruches 1 sowie eine zugehörige Vorrichtung.

Großvolumige Lebensmittel, beispielsweise Rollbraten, lassen sich nur unter wirtschaftlich kaum zu vertretenden Bedingungen in den gebräuchlichen Gefriereinrichtungen, beispielsweise Langtunnel- und Wendelbandfroster, auf die gewünschte Gefriertemperatur bringen. Dies ist besonders dann der Ball, wenn die Lebensmittel einen hohen Wassergehalt besitzen und der Kühlmittelbedarf daher entsprechend hoch ist.

Aus der DE-PS 919 573 ist ein Verfahren bekannt, bei dem derartige Lebensmittel in einem Druckbehälter zunächst einem Vakuum ausgesetzt werden, wonach in den Druckbehälter ein Kühlgas eingeleitet und ein Druck aufgebaut wird. Der Druck beträgt beispielsweise 4 bar und die eingeleitete Kühlgasmenge wird so bemessen, daß sie zum vollständigen Gefrieren der Lebensmittel ausreicht. Infolge des zuvor erzeugten Vakuums dringen die Kühlgase unter dem Verfahrensdruck schnell in die Poren der Lebensmittel ein, wodurch die Kühlzeit verringert wird. Außerdem ist die Kühlwirkung der Gase bei einem Überdruck von einigen bar größer als bei atmosphärischen Bedingungen. Nach dem Verfahren der DE-PS 919 573 werden die Kühlgase mit Hilfe einer Kühlanlage in Wärmeaustauschern auf die gewünschte niedrige Temperatur gebracht. Es ist bereits vorgeschlagen worden, stattdessen tiefsiedende verflüssigte Gase, insbesondere Stickstoff, zu verwenden. Nach diesem Vorschlag wird die gesamte Menge an flüssigem Gas, welche zum Gefrieren der in dem Behälter befindlichen Lebensmittel erforderlich ist, in einen eigenen, im Druckbehälter angeordneten Speicher eingefüllt und von dort nach und nach in den Druckbehälter abgegeben. Der Druckaufbau erfolgt hierbei von selbst durch das Verdampfen des verflüssigten Gases.

Mit den bekannten Verfahren lassen sich großvolumige Lebensmittel mit hohem Wasseranteil zwar schonend und im Vergleich zu üblichen Gefrierverfahren auch schneller gefrieren, doch ist die Verfahrensführung kompliziert und die zugehörigen Vorrichtungen sind sehr aufwendig.

Der Erfindung liegt daher die Aufgabe zugrunde, das Verfahren des Druckgefrierens zu vereinfachen und damit wirtschaftlicher zu gestalten, sowie eine entsprechend einfachere Vorrichtung zur Durchführung des Verfahrens zu schaffen.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Nach der Erfindung wird demnach das Kühlgas mit Hilfe eines Verdichters durch den Druckbehälter umgewälzt. Es wird nicht die gesamte zur Kühlung erforderliche Gasmenge umgewälzt, sondern nur eine kleine Teilmenge. Diese wird laufend ergänzt durch Eindüsen von verflüssigtem tiefsiedenden Gas. Eine entsprechende Menge verdampften Gases wird gleichzeitig entfernt. Das Injizieren des verflüssigten Gases erfolgt temperaturgesteuert. Hierdurch kann der Gefrierverlauf optimal gestaltet werden, indem nur die jeweils gerade benötigte Menge an verflüssigtem Gas eingespeist wird. Durch die Umwälzung des Kühlgases wird gleichzeitig der Wärmeübergang verbessert und somit der Gefrierprozeß beschleunigt. Der für das erfindungsgemäße Verfahren erforderliche Druckbehälter kann daher erheblich kleiner ausgeführt werden als dies bisher möglich war. Es sind keine besonderen Einbauten im Druckbehälter erforderlich, vielmehr kann mit ausschließlich marktüblichen Einrichtungen wie Überströmventilen, Verdichtern, Manometern und Temperaturüberwachungseinrichtungen das Verfahren ausgeübt werden. Als Kühlgas wird Stickstoff bevorzugt. Der optimale Druckbereich liegt bei mindestens 4 bar, jedoch kann auch mit erheblichen höheren Drücken gearbeitet werden, wenn der Druckbehälter entsprechend dimensioniert wird.

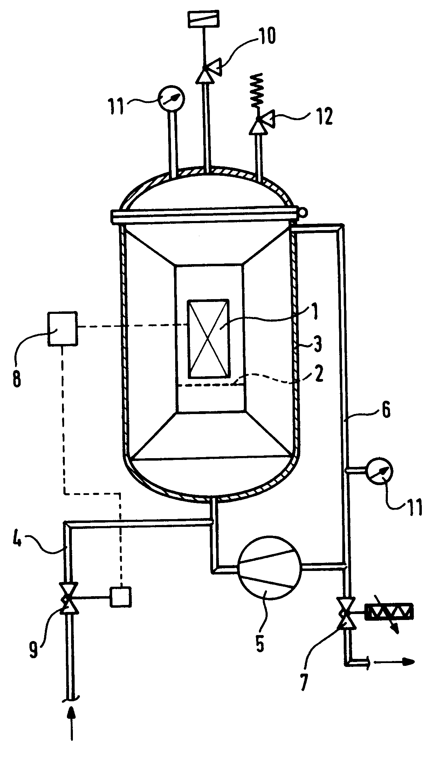

Die Zeichnung veranschaulicht ein Ausführungsbeispiel der Erfindung in schematischer Form. Die zu gefrierenden großvolumigen Lebensmittel 1 mit hohem Wassergehalt befinden sich auf einer Halterung 2 im Druckbehälter 3. Zu Beginn des Gefrierverfahrens gemäß der Erfindung wird verflüssigter Stickstoff aus der Leitung 4 in den Druckbehälter 3 injiziert wird. Der verflüssigte Stickstoff verdampft und erzeugt so den gewünschten Verfahrensdruck von über 4 bar. Danach wird mit Hilfe des Verdichters 5 und der Umwälzleitung 6 verdampftes Gas aus dem Behälter 3 abgezogen und durch den Verdichter 5 wieder in den Druckbehälter 3 eingeführt. In den vom Verdichter 5 kommenden Kaltgasstrom wird weiterhin ständig oder in kurzen Abständen verflüssigter Stickstoff aus der Leitung 4 injiziert. Eine der injizierten Gasmenge entsprechende Gasmenge wird durch das Überströmventil 7 laufend aus der Umwälzleitung 6 abgezogen. Das Überströmventil 7 dient gleichzeitig zum Einstellen des Verfahrensdruckes von über 4 bar. Die Menge des aus der Leitung 4 injizierten flüssigen Stickstoffs wird mit Hilfe der Temperaturkontrolleinrichtung 8 überwacht und das Dosierventil 9 entsprechend geregelt. Sobald die gewünschte Gefriertemperatur erreicht ist, wird die Zufuhr von flüssigem Stickstoff durch die Leitung 4 beendet, der Verdichter 5 abgestellt und das im Druckbehälter 3 befindliche Gas durch das Entnahmeventil 10 entfernt. Danach können die gefrorenen Lebensmittel 1 aus dem Druckbehälter 3 entnommen werden. Zur Überwachung dienen die Manometer 11. Außerdem ist ein Sicherheitsventil 12 im Deckel des Druckbehälters 3 angebracht. Das Überströmventil 7 könnte auch direkt am Druckbehälter 3 angebracht werden. Dies könnte aber zu höheren Kühlmittelverbräuchen führen.

Die erfindungsgemäße Vorrichtung ist überaus einfach im Aufbau und im Betrieb. Außer dem Druckbehälter 3 mit der Halterung 2 sind nur marktübliche Bauteile erforderlich.

Mit der erfindungsgemäßen Vorrichtung können die Gefrierzeiten um durchschnsittlich 20% reduziert werden.

## Patentansprüche

1. Verfahren zum Gefrieren großvolumiger Lebensmittel (1) mit hohem Wasseranteil, bei dem die Lebensmittel in einem Druckbehälter (3) durch Beaufschlagung mit einem Kühlgas unter Druck gefroren werden,
dadurch gekennzeichnet,
daß als Kühlgas ein tiefsiedendes verflüssigtes Gas in den Druckbehälter eingesprüht wird, wo es verdampft und den gewünschten Druck erzeugt, wonach es durch einen Verdichter (5) aus dem Druckbehälter abgezogen und diesem im Kreislauf wieder zugeführt wird, wobei in den in den Druckbehälter wieder eintretenden Kaltgasstrom weiter verflüssigtes Gas injiziert wird und eine dem injizierten verflüssigten Gas entsprechende Gasmenge aus der zum Verdichter führenden Leitung abgeführt wird.

2. Verfahren nach Anspruch 1,
dadurch gekennzeichnet,
daß als Kühlgas Stickstoff dient.

3. Verfahren nach Anspruch 1 oder 2,
dadurch gekennzeichnet,
daß der Behälterdruck auf über 4 bar gehalten wird.

4. Vorrichtung zur Durchführung des Verfahrens nach einem der Ansprüche 1 bis 3,
bestehend aus einem Druckbehälter (3) mit Anschlüssen zur Zufuhr und Ableitung eines Kühlgases,
dadurch gekennzeichnet,
daß die Anschlüsse durch eine mit einem Verdichter (5) versehene Umwälzleitung (6) miteinander verbunden sind,
welche auf der Druckseite des Verdichters einen Einspeiseanschluß für verflüssigtes Kühlgas und auf der Saugseite des Verdichters ein auf den Verfahrensdruck einstellbares Überströmventil (7) besitzt.

## Claims

1. Method of freezing large-volume foods (1) with a high water content, in which method the foods are frozen in a pressure vessel (3) by applying a cooling gas under pressure, characterised in that a low-boiling, liquefied gas is sprayed, as cooling gas, into the pressure vessel where it evaporates and produces the desired pressure, after which it is drawn off from the pressure vessel by a compressor (5) and is fed back to said pressure vessel in circulation, liquefied gas continuing to be injected into the cold gas stream again occurring in the pressure vessel and a quantity of gas, corresponding to the injected liquefied gas, being led off from the pipe leading to the compressor.

2. Method according to Claim 1, characterised in that nitrogen is used as cooling gas.

3. Method according to Claim 1 or 2, characterised in that the pressure in the vessel is maintained at above 4 bar.

4. Device for carrying out the method according to one of Claims 1 to 3, consisting of a pressure vessel (3) with connections for feeding and drawing off a cooling gas, characterised in that the connections are connected to one another by a circulation pipe (6) which is provided with a compressor (5) and has a feed connection for liquefied cooling gas on the discharge side of the compressor and, on the suction side of the compressor, an overflow valve (7) which can be adjusted to the process pressure.

## Revendications

1. Procédé de congélation de produits alimentaires volumineux (1), ayant une forte teneur en eau, les produits alimentaires étant congelés dans un réservoir de pression (3) alimenté par un gaz de refroidissement sous pression, procédé caractérisé en ce que le gaz de refroidissement est un gaz à basse température de liquéfaction injecté dans le réservoir de pression où il se vaporise et génère la pression souhaitée, puis il est extrait du réservoir sous pression par un compresseur (5) pour alimenter de nouveau le circuit, du gaz liquéfié continuant d'être injecté dans la veine de gaz froid arrivant dans le réservoir sous pression et une quantité de gaz correspondant au gaz injecté, liquéfié, est extraite de la conduite allant vers le compresseur.

2. Procédé selon la revendication 1, caractérisé en ce que le gaz de refroidissement est de l'azote.

3. Procédé selon la revendication 1 ou 2, caractérisé en ce que la pression du réservoir est maintenue au-dessus de 4 bars.

4. Dispositif pour la mise en oeuvre du procédé selon l'une des revendications 1 à 3, composé d'un réservoir de pression (3) avec des ajutages pour l'alimentation et l'évacuation d'un gaz de refroidissement, dispositif caractérisé en ce que les ajutages sont reliés par une conduite de circulation (6) munie d'un compresseur (5), cette conduite ayant, du côté pression du compresseur, un ajutage d'alimentation pour le gaz de refroidissement liquéfié et, du côté de l'aspiration du compresseur, une soupape de débordement (7) réglable à la pression de mise en oeuvre du procédé.
